# EUROPÄISCHE PATENTSCHRIFT

(11) **EP 2 012 052 B1**
(45) Veröffentlichungstag und Bekanntmachung des Hinweises auf die Patenterteilung: **02.11.2011**
(21) Anmeldenummer: 08011060.4
(22) Anmeldetag: 18.06.2008
(51) Int. Cl.: F16L 25/00, F16L 37/098, F16L 37/14

(54) **Kupplungssystem**
Coupling system
Système de couplage

(30) Priorität: 19.06.2007 DE 102007028061
(43) Veröffentlichungstag der Anmeldung: 07.01.2009
(73) Patentinhaber: FRÄNKISCHE ROHRWERKE Gebr. Kirchner GmbH & Co. KG, 97486 Königsberg (DE)
(72) Erfinder: Schröter, Sören, 96103 Hallstadt (DE)
(74) Vertreter: Herzog, Markus

(56) Entgegenhaltungen:
- DE-A1- 3 729 570
- DE-A1-102005 030 457
- GB-A- 2 180 313
- US-A- 5 951 063
- US-A1- 2003 197 374

## Beschreibung

Die Erfindung betrifft ein Kupplungssystem zum Verbinden eines Schlauchs mit einer Anschlussbuchse mittels eines vom Schlauch und von der Anschlussbuchse separat ausgebildeten Verbindungselements, wobei der Schlauch an zumindest einem seiner Enden einen Anschlussstutzen aufweist, der in die Anschlussbuchse einsteckbar oder auf diese aufsteckbar ist, und wobei das Verbindungselement am Anschlussstutzen-Ende des Schlauchs mittels einer Rastverbindung in axialer Richtung des Schlauchs fixierbar ist.

Derartige Kupplungssysteme sind beispielsweise aus der DE 3729570, DE 10 2005 030 457 A1 oder der nachveröffentlichten DE 10 2006 045 639.4 bekannt. Diese Kupplungssysteme werden üblicherweise dazu verwendet, beispielsweise in einem Kraftfahrzeug Schlauchleitungen für Flüssigkeiten oder Gase mit Anschlussbuchsen mit Bauteilen, beispielsweise Motorkomponenten, zu verbinden. Die Rastverbindung ist dabei in beiden Fällen von einer Vielzahl von Rastelementen gebildet, welche über den Umfang des Verbindungselements verteilt angeordnet sind und beim Aufschieben des Verbindungselements auf das Anschlussstutzen-Ende des Schlauchs gegen die von ihrer Eigenelastizität herrührende Rückstellkraft ausgelenkt werden müssen. Die herkömmlichen Kupplungssysteme weisen daher den Nachteil auf, dass die Montage des Verbindungselements auf dem Anschlussstutzen-Ende des Schlauchs beschwerlich ist und die Gefahr einer Beschädigung eines oder mehrerer der Rastelemente besteht.

Es ist daher Aufgabe der vorliegenden Erfindung, ein gattungsgemäßes Kupplungssystem bereitzustellen, bei welchem das Verbindungselement in einfacher Weise auf dem Anschlussstutzen-Ende des Schlauchs montiert werden kann.

Diese Aufgabe wird erfindungsgemäß durch ein Kupplungssystem der eingangs genannten Art gelöst, bei welchem zur Herstellung der Rastverbindung ein vom Anschlussstutzen und vom Verbindungselement gesondert ausgebildetes Rastelement vorgesehen ist, welches im montierten Zustand eine Öffnung des Verbindungselements durchsetzt, mit einer am Anschlussstutzen vorgesehenen, sich in Umfangsrichtung des Anschlussstutzen erstreckenden Nut in Axialeingriff steht und am Anschlussstutzen oder/und am Verbindungselement verrastet ist. Es ist somit nicht erforderlich, beim Aufschieben des Verbindungselements auf das Anschlussstutzen-Ende des Schlauchs Rastelemente gegen ihre Eigenelastizität aufzuweiten. Vielmehr wird das Rastelement erst dann zum Verbindungselement hinzugefügt, wenn sich dieses bereits in seiner Montagestellung bezüglich des Anschlussstutzen-Endes des Schlauchs befindet. Das Aufschieben des Verbindungselements erfordert daher keinen besonderen Kraftaufwand, und es besteht daher auch nicht die Gefahr einer Beschädigung des Verbindungselements oder des Anschlussstutzen-Endes des Schlauchs.

Zur Erhöhung der Stabilität des Axialeingriffs zwischen dem Rastelement und der Nut ist das Rastelement im montierten Zustand mit seinem freien Ende eine weitere Öffnung des Verbindungselements durchsetzt und mit einem Rand dieser weiteren Öffnung verrastet. Das Rastelement kann sich nämlich an zwei voneinander beabstandeten Positionen, nämlich im Bereich der beiden Öffnungen, an dem Verbindungselement abstützen, wobei der Axialeingriff mit der Nut des Anschlussstutzen-Endes des Schlauchs zwischen diesen beiden Positionen stattfindet.

Zur Verrastung des Rastelements kann vorzugsweise an dessen freiem Ende eine, vorzugsweise nach radial außen weisende, Rastnase vorgesehen sein.

Die Stabilität der Verrastung kann ferner dadurch erhöht werden, dass das Rastelement Teil einer im Wesentlichen C-förmigen Rasteinheit ist, wobei die freien Schenkel dieser C-Form beide als Rastelement ausgebildet sind. Insbesondere dann, wenn die beiden Rastelemente im montierten Zustand in zwei einander im Wesentlichen diametral gegenüberliegenden Umfangsbereichen mit dem Anschlussstutzen in Axialeingriff stehen, kann die Stabilität der Verrastung verbessert werden. In diesem Falle heben sich etwaige, von dem Axialeingriff der beiden Rastelemente mit der Nut ausgehende Kippmomente aufgrund der diametralen Gegenüberlage nämlich gegenseitig auf.

In Weiterbildung der Erfindung kann der Anschlussstutzen eine einzige sich in Umfangsrichtung erstreckende Nut aufweisen, in welche beide Rastelemente eingreifen. Diese sich in Umfangsrichtung erstreckende Nut kann dabei eine sich über den vollen Umfang erstreckende Nut sein. Dies ermöglicht für bestimmte Anwendungen, beispielsweise die aus der nachveröffentlichten DE 10 2006 045 639.4 bekannte Art des Lösens, eine beliebige Verdrehbarkeit des Verbindungselements relativ zum Anschlussstutzen-Ende des Schlauchs.

Es ist jedoch auch möglich, dass an einem der beiden Teile, Anschlussstutzen oder Rastelement bzw. Rasteinheit, ein Vorsprung vorgesehen ist, welcher im montierten Zustand des Verbindungselements mit einer Ausnehmung, die an dem jeweils anderen Teil, Rastelement bzw. Rasteinheit oder Anschlussstutzen, vorgesehen ist, in Umfangsrichtung in Anlage bringbar ist. In diesem Fall kann die Nut auch eine einzige endliche Nut sein, deren Enden vom Vorsprung begrenzt sind. Der Vorsprung kann ferner dazu genutzt werden, im Zusammenwirken mit dem Rastelement bzw. der Rasteinheit eine Verdrehsicherung für das Verbindungselement relativ zum Anschlussstutzen-Ende des Schlauchs bereitzustellen. In Weiterbildung der Erfindung kann der Anschlussstutzen auch wenigstens zwei Vorsprünge aufweisen, welche die beiden Nuten in Umfangsrichtung voneinander trennen.

Um das Aufschieben des Verbindungselements auf das Anschlussstutzen-Ende des Schlauchs in hohem Maße erleichtern zu können, wird ferner vorgeschlagen, dass der größte Wert des Außendurchmessers des Anschlussstutzens in einem Längenabschnitt, der sich vom freien Ende des Anschlussstutzens zumindest bis zu der sich in Umfangsrichtung erstreckenden Nut erstreckt, kleiner oder allenfalls geringfügig größer ist als der kleinste Wert des Innendurchmessers des Verbindungselements in dessen diesem Bereich im montierten Zustand gegenüberliegenden Längenabschnitt. Das Wort "geringfügig" ist dabei in diesem Zusammenhang so zu verstehen, dass der Unterschied der beiden Werte allenfalls einige 1/10 mm beträgt, insbesondere weniger als 0,5 mm.

Zur Erleichterung der Montage des Verbindungselements auf dem Anschlussstutzen-Ende des Schlauchs kann zudem auf der von einem freien Ende des Anschlussstutzens abgewandten Seite der sich in Umfangsrichtung erstreckenden Nut wenigstens ein von dem Anschlussstutzen in radialer Richtung abstehendes Anschlagselement vorgesehen sein. Dieses Anschlagselement ist dabei vorzugsweise derart positioniert, dass sich das Verbindungselement dann, wenn es an dem Anschlagselement anliegt, in Axialrichtung in der für die Verbindung mit dem Rastelement erforderlichen Relativlage bezüglich des Anschlussstutzen-Endes des Schlauchs befindet. Vorzugsweise kann das wenigstens eine Anschlagselement dabei von einer sich in Umfangsrichtung des Anschlussstutzens, vorzugsweise über dessen gesamten Umfang, erstreckende Rippe gebildet sein.

Die Erfindung wird im folgenden an einem Ausführungsbeispiel anhand der beigefügten Zeichnung näher erläutert werden. Es stellt dar:
- Figur 1: eine perspektivische Ansicht eines erfindungsgemäßen Kupplungssystems;
- Figur 2: eine Ansicht des Kupplungssystems gemäß Figur 1 aus Blickrichtung des Pfeils II in Figur 1, wobei die Anschlussbuchse und das Verbindungselement in Schnittansicht und der Schlauch in Draufsicht gehalten sind;
- Figur 3: eine Ansicht des Kupplungssystems gemäß Figur 1 aus Blickrichtung des Pfeils III in Figur 1, wobei die Anschlussbuchse und des Verbindungselements in Schnittansicht und der Schlauch in Draufsicht gehalten sind;

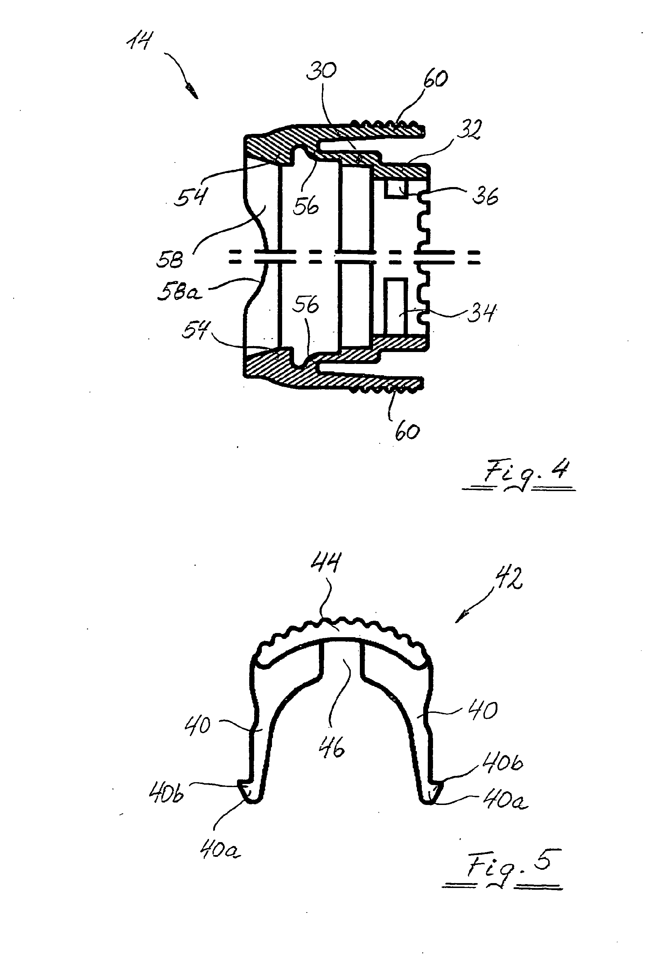

- Figur 4: zwei Schnittansichten des Verbindungselements des erfindungsgemäßen Kupplungssystems in Ansichten ähnlich Figur 3, wobei die obere Schnittansicht aus Richtung des Pfeils III in Figur 1 genommen ist und die untere Schnittansicht aus Richtung des Pfeils III' in Figur 1 genommen, zur übersichtlicheren Darstellung, jedoch spiegelverkehrt dargestellt ist; und
- Figur 5: eine Draufsicht auf die Rasteinheit des erfindungsgemäßen Kupplungssystems.

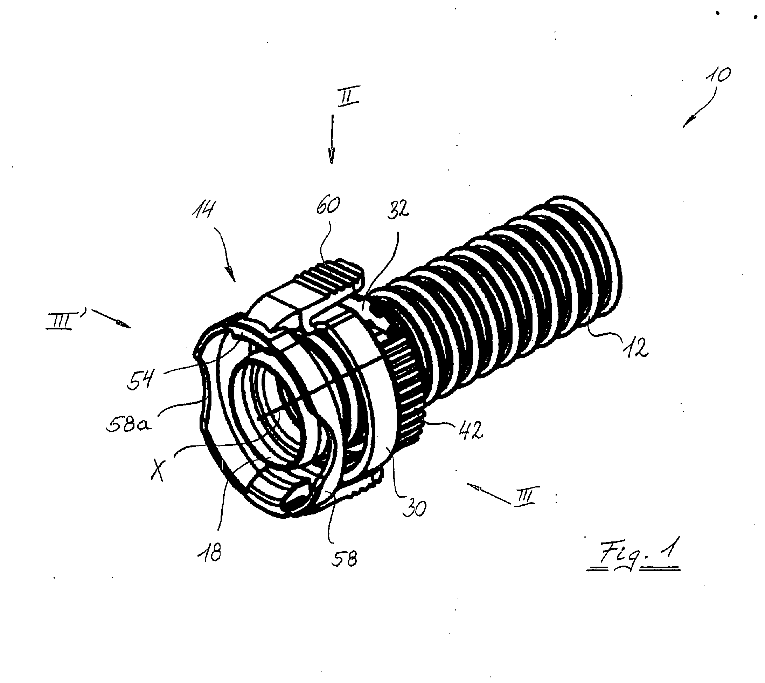

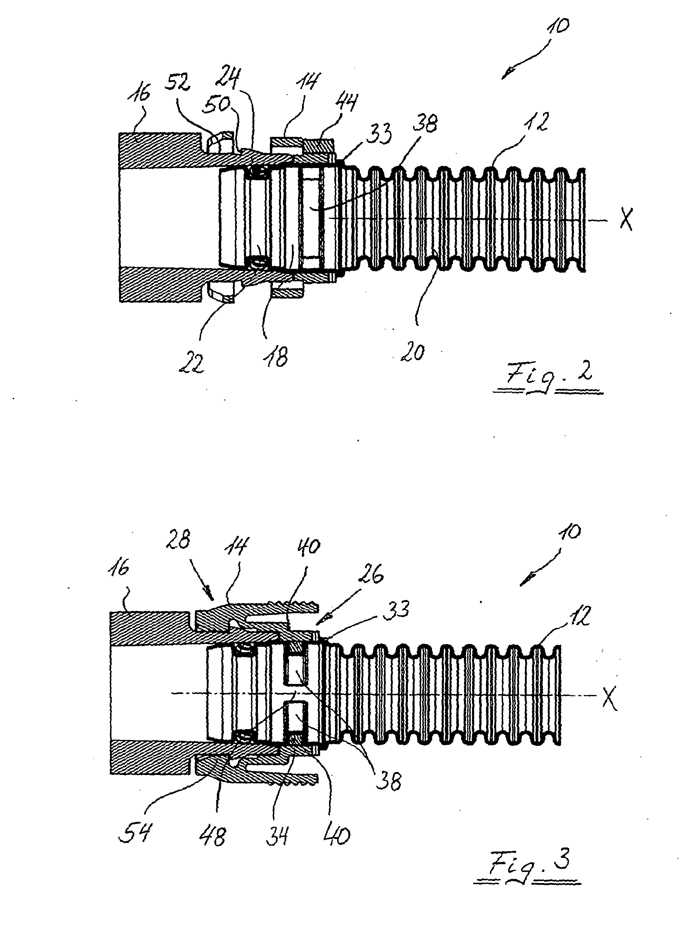

Das erfindungsgemäße Kupplungssystem ist in Figur 1 ganz allgemein mit 10 bezeichnet. Es umfasst einen Schlauch 12 und ein von diesem gesondert ausgebildetes Verbindungselement 14. Ferner umfasst es eine in den Figuren 2 und 3 dargestellte Anschlussbuchse 16, die entweder an einem weiteren Schlauch oder an einem Bauteil vorgesehen ist, an das der Schlauch 12 angeschlossen werden soll.

Wie insbesondere in den Figuren 2 und 3 zu erkennen ist, verfügt der Schlauch 12 über einen Anschlussstutzen 18 und einen Rohrbereich 20, der beispielsweise als Wellrohr ausgebildet sein kann. Der Anschlussstutzen 18 kann mit dem Rohrbereich 20 einstückig ausgebildet oder von diesem gesondert ausgebildet und mit diesem betriebsfest verbunden sein. In dem dargestellten Ausführungsbeispiel wird der Anschlussstutzen 18 in die Anschlussbuchse 16 eingesteckt. Daher ist am Anschlussstutzen 18 des Schlauchs 12 eine Ringnut 22 zur Aufnahme eines Dichtelements 24, vorzugsweise eines O-Rings, ausgebildet, welches zur dichtenden Anlage gegen die zylindrische Innenfläche der Anschlussbuchse 16 bestimmt ist.

Das Verbindungselement 14 dient zur Sicherung der Verbindung zwischen dem Anschlussstutzen 18 des Schlauchs 12 und der Anschlussbuchse 16. Hierzu ist das Verbindungselement 14 derart ausgebildet, dass es mit dem Anschlussstutzen 18 eine erste Rastverbindung 26 und mit der Anschlussbuchse 16 eine zweite Rastverbindung 28 eingehen kann (siehe Figur 3).

Die erste Rastverbindung 26 dient der Befestigung des Verbindungselements 14 am Anschlussstutzen 18 des Schlauchs 12. Zur Montage des Verbindungselements 14 am Anschlussstutzen 18 wird das Verbindungselement 14 mit seinem vorzugsweise ringförmig ausgebildeten Hauptkörper 30 solange auf den Anschlussstutzen 18 aufgeschoben, bis der Hauptkörper 30 oder ein mit diesem Hauptkörper 30 verbundener, vorzugsweise ebenfalls ringförmig ausgebildeter Verbindungskörper 32 in Anlage an eine Ringrippe 33 gerät. In diesem Zustand liegen zwei erste Öffnungen 34 und zwei zweite Öffnungen 36, die in dem Verbindungskörper 32 ausgebildet sind, jeweils einer sich in Umfangsrichtung um die Längsachse X erstreckenden Nut 38 des Anschlussstutzens 18 in axialer Ausrichtung gegenüber. Zur Verrastung des Verbindungselements 14 mit dem Anschlussstutzen 18 werden zwei Rastelemente 40 einer Rasteinheit 42 mit ihren freien Enden 40a in die ersten Öffnungen 34 eingeführt, so dass sie sich durch die Umfangsnut bzw. die Umfangsnuten 38 bis zu den zweiten Öffnungen 36 erstrecken, mit deren Rand sie mittels der an ihren freien Enden 40a vorgesehenen Rastnasen 40b verrastet sind. In diesem Zustand liegen die Rastelemente 40 im Wesentlichen formschlüssig in der Umfangsnut bzw. den Umfangsnuten 38 und sichern so das Verbindungselement 14 gegen eine unbeabsichtigte Bewegung relativ zum Anschlussstutzen 18.

Die Rasteinheit 42 ist im wesentlichen U- bzw. C-förmig ausgebildet, wobei die Rastelemente 40 die Seitenschenkel der U- bzw. C-Form bilden und der Basisschenkel der U- bzw. C-Form einen Griffabschnitt 44 bildet, der vorzugsweise gerillt ausgebildet ist, um dem Finger einer Bedienungspersonen besseren Halt geben zu können. Ferner folgen die beiden Rastelemente 40 im Bereich ihrer Verbindung zum Basisschenkel 44 noch über eine vorbestimmte Länge dem Verlauf des Basisschenkels 44, und zwar so weit, dass zwischen ihnen eine Ausnehmung 46 verbleibt. In diese Ausnehmung 46 greift im montierten Zustand ein Vorsprung 48 ein, der am Anschlussstutzen 18 ausgebildet ist und die Längsenden der Umfangsnut bzw. zweier Umfangsnuten 38 begrenzt. Durch diesen Eingriff wird das Verbindungselement 14 an dem Anschlussstutzen 18 auch gegen ein unbeabsichtigtes Verdrehen in Umfangsrichtung um die Achse X gesichert. Festzuhalten ist jedoch, dass ein solcher Verdrehschutz bei bestimmten Ausführungsformen auch unerwünscht sein kann. In diesem Falle braucht aber lediglich jeglicher dem Vorsprung 48 entsprechender Vorsprung weggelassen zu werden, so dass die Umfangsnut 38 eine endlos umlaufende Umfangsnut ist.

Die zweite Verrastung 28 kann entweder so ausgebildet sein, wie dies aus der DE 10 2005 030 457 A1 bekannt und auch bei der in den Figuren der vorliegenden Anmeldungen dargestellten Ausführungsformen verwirklicht ist. Es ist jedoch auch möglich, die zweite Verrastung 28 so auszubilden, wie dies aus der nachveröffentlichten DE 10 2006 045 639.4 der Anmelderin bekannt ist, deren diesbezügliche Offenbarung hiermit ausdrücklich in Bezug genommen wird.

In beiden Fällen wird eine an der Anschlussbuchse 16 ausgebildete Rastfläche 50 einer Rastausnehmung 52 von Rastelementen 54 des Verbindungselements 14 zur Herstellung der zweiten Verrastung 28 hintergriffen. Die Rastelemente 54 sind zum einen über flexible Stege 56 mit dem Hauptkörper 30 des Verbindungselements 14 verbunden, und zum anderen über im Wesentlichen in Umfangsrichtung verlaufende, vorzugsweise kreisbogenförmig ausgebildete Sicherungselemente 58 miteinander verbunden. Die Sicherungselemente 58 haben die Aufgabe, den Eingriff der Rastelemente 54 in der Rastausnehmung 52 zu sichern. Die Sicherungselemente 58 müssen hierzu eine ausreichende Steifigkeit besitzen, um sich einem unerwünschten Herausheben der Rastelemente 54 aus der Rastausnehmung 52 widersetzen zu können. Andererseits müssen sie aber auch flexibel genug sein, damit die Rastelemente 54 durch die Hebelwirkung der mit ihnen verbundenen Lösehebel 60 aus der Rastausnehmung 52 herausgehoben werden können.

Das Herausheben der Rastelemente 54 aus der Rastausnehmung 52 kann alternativ aber auch so erfolgen, wie dies in der DE 10 2006 045 639.4 der Anmelderin beschrieben ist, d.h. durch eine Drehung des Verbindungselements 14 um die Achse X und dessen Zusammenwirken mit Rampenflächen. Gemäß einer weiteren Alternative kann zum Lösen ebenfalls auf die Wirkung der Lösehebel 60 verzichtet werden. Und zwar kann man die Sicherungselemente 58 einfach im Bereich ihrer Verjüngungen 58a zusammendrücken, um diese derart zu verformen, dass die Rastelemente 54 aus der Rastausnehmung 52 herausgehoben werden.

Nachzutragen ist noch, dass bei der dargestellten Ausführungsformen nicht nur in axialer Richtung für eine für die Anbringung der Rasteinheit 42 korrekte Lage gesorgt werden kann, nämlich durch die Ringrippe 33, sondern dass auch in Umfangsrichtung für eine für die Anbringung der Rasteinheit 42 korrekte Lage gesorgt werden kann. Hierzu kann nämlich beispielsweise eine von der Ringrippe 33 in axialer Richtung abstehende Nase vorgesehen sein, welche mit einer an dem Hauptkörper 30 oder dem Verbindungskörper 32 vorgesehenen Ausnehmung zusammenwirkt. Durch das Zusammenspiel der beiden Orientierungshilfen kann die Anbringung des Verbindungselements 14 an dem Anschlussstutzen 18 des Schlauchs 12 quasi "blind" vorgenommen werden.

## Patentansprüche

1. Kupplungssystem (10) mit wenigstens einem Schlauch (12) zum Verbinden des wenigstens einen Schlauchs (12) mit einer Anschlussbuchse (16) mittels eines vom Schlauch (12) und von der Anschlussbuchse (16) separat ausgebildeten Verbindungselements (14), wobei der wenigstens eine Schlauch (12) an zumindest einem seiner Enden einen Anschlussstutzen (18) aufweist, der in die Anschlussbuchse (16) einsteckbar oder auf diese aufsteckbar ist, und
wobei das Verbindungselement (14) am Anschlussstutzen-Ende des Schlauchs (12) mittels einer Rastverbindung (26) in axialer Richtung des Schlauchs (12) fixierbar ist,
wobei zur Herstellung der Rastverbindung (26) ein vom Anschlussstutzen (18) und vom Verbindungselement (14) gesondert ausgebildetes Rastelement (40) vorgesehen ist, welches im montierten Zustand eine Öffnung (34) des Verbindungselements (14) durchsetzt, mit einer am Anschlussstutzen (18) vorgesehenen, sich in Umfangsrichtung des Anschlussstutzen (18) erstreckenden Nut (38) in Axialeingriff steht und am Anschlussstutzen (18) oder/und am Verbindungselement (14) verrastet ist,
wobei das Rastelement (40) im montierten Zustand mit seinem freien Ende (40a) eine weitere Öffnung (36) des Verbindungselements (14) durchsetzt und mit einem Rand dieser weiteren Öffnung (36) verrastet ist, **dadurch gekennzeichnet, dass** der Axialeingriff des Rastelements (40) mit der Nut (38) des Anschlussstutzens (18) zwischen zwei unterschiedlichen Öffnungen (34, 36) des Verbindungselements (14) stattfindet, welche von dem Rastelement (40) durchsetzt werden.

2. Kupplungssystem nach Anspruch 1,
**dadurch gekennzeichnet, dass** an dem freien Ende (40a) des Rastelements (40) eine, vorzugsweise nach radial außen weisende,
Rastnase (40b) vorgesehen ist.

3. Kupplungssystem nach Anspruch 1 oder 2,
**dadurch gekennzeichnet, dass** das Rastelement (40) Teil einer im Wesentlichen C-förmigen Rasteinheit (42) ist, wobei die freien Schenkel dieser C-Form beide als Rastelement (40) ausgebildet sind.

4. Kupptungssystem nach Anspruch 3,
**dadurch gekennzeichnet, dass** die beiden Rastelemente (40) im montierten Zustand in zwei einander im Wesentlichen diametral gegenüberliegenden Umfangsbereichen mit dem Anschlussstutzen (18) in Axialeingriff stehen.

5. Kupplungssystem nach Anspruch 3 oder 4,
**dadurch gekennzeichnet, dass** der Anschlussstutzen (18) eine sich in Umfangsrichtung erstreckende Nut (38) aufweist, in welche beide Rastelemente (40) eingreifen.

6. Kupplungssystem nach einem der Ansprüche 1 bis 5,
**dadurch gekennzeichnet, dass** an einem (18) der beiden Teile, Anschlussstutzen oder Rastelement, ein Vorsprung (48) vorgesehen ist, welcher im montierten Zustand des Verbindungselements (14) mit einer Ausnehmung (46), die an dem jeweils anderen Teil (40 bzw. 42), Rastelement oder Anschlussstutzen, vorgesehen ist, in Umfangsrichtung in Anlage bringbar ist.

7. Kupplungssystem nach einem der Ansprüche 1 bis 4 und 6,
**dadurch gekennzeichnet, dass** der Anschlussstutzen (18) wenigstens zwei Vorsprünge (48) aufweist, welche die beiden Nuten (38) in Umfangsrichtung voneinander trennen.

8. Kupplungssystem nach einem der Ansprüche 1 bis 7,
**dadurch gekennzeichnet, dass** der größte Wert des Aussendurchmessers des Anschlussstutzens (18) in einem Längenabschnitt, der sich vom freien Ende des. Anschlussstutzens (18) zumindest bis zu der sich in Umfangsrichtung erstreckenden Nut (38) erstreckt, kleiner oder allenfalls geringfügig größer ist als der kleinste Wert des Innendurchmessers des Verbindungselements (14) in dessen diesem Bereich im montierten Zustand gegenüberliegenden Längenabschnitt.

9. Kupplungssystem nach einem der Ansprüche 1 bis 8,
**dadurch gekennzeichnet, dass** auf der von einem freien Ende des Anschlussstutzens (18) abgewandten Seite der sich in Umfangsrichtung erstreckenden Nut (38) wenigstens ein von dem Anschlussstutzen (18) in radialer Richtung abstehendes Anschlagselement (33) vorgesehen ist.

10. Kupplungssystem nach Anspruch 9,
**dadurch gekennzeichnet, dass** das wenigstens eine Anschlagselement (33) von einer sich in Umfangsrichtung des Anschlussstutzens (18), vorzugsweise über dessen gesamten Umfang, erstreckenden Rippe (33) gebildet ist.

## Claims

1. A coupling system (10) with at least one hose (12) for connecting the at least one hose (12) to a connecting bushing (16) by means of a connecting element (14) formed separately from the hose (12) and from the connecting bushing (16),
Wherein, on at least one of its ends, the at least one hose (12) has a connecting socket (18) which can be fitted into the connecting bushing (16) or can be fitted thereon,
wherein the connecting element (14) can be secured to the connecting socket end of the hose (12) by means of a detent connection (26) in the axial direction of the hose (12),
wherein a detent element (40) is provided in order to produce the detent connection (26), which detent element is formed separately from the connecting socket (18) and from the connecting element (14), and which in the assembled condition passes through an opening (34) of the connecting element (14), is in axial engagement with a groove (38) provided on the connecting socket (18) and extending in the peripheral direction of the connecting socket (18), and is engaged on the connecting socket (18) and/or on the connecting element (14), wherein, in the assembled condition, the detent element (40) passes with its free end (40a) through a further opening (36) of the connecting element (14) and is engaged with a rim of this further opening (36), **characterised in that** the axial engagement of the detent element (40) with the groove (38) of the connecting socket (18) takes place between two different openings (34,36) of the connecting element (14), through which the detent element (40) passes.

2. A coupling system according to Claim 1,
**characterised in that** a preferably radially outward facing detent lug (40b) is provided at the free end (40a) of the detent element (40)

3. A coupling system according to Claim 1 or 2,
**characterised in that** the detent element (40) is part of an essentially C-shaped detent unit (42), wherein the free arms of this C-shape are both in the form of a detent element (40).

4. A coupling system according to Claim 3,
**characterised in that**, in the assembled condition, the two detent elements (40) are in axial engagement with the connecting socket (18) in substantially diametrically opposed circumferential zones.

5. A coupling system according to Claim 3 or 4,
**characterised in that** the connecting socket (18) has a groove (38) which extends in a peripheral direction and in which both detent elements (40) engage.

6. A coupling system according to any one of Claims 1 to 5, **characterised in that** on one part (18) of the two parts, connecting socket or detent element, a projection (48) is provided which in the assembled condition of the connecting element (14) can be brought into contact in a peripheral direction with a recess (46) which is provided on the respective other part (40 or 42), detent element or connecting socket.

7. A coupling system according to any one of Claims 1 to 4 and 6, **characterised in that** the connecting socket (18) has at least two projections (48) which separate the two grooves (38) from one another in a peripheral direction.

8. A coupling system according to any one of Claims 1 to 7, **characterised in that** the maximum value of the outer diameter of the connecting socket (18) in a longitudinal portion, which extends from the free end of the connecting socket (18) at least up to the groove (38) extending in a peripheral direction, is smaller or, at most, slightly larger than the minimum value of the inner diameter of the connecting element (14) in its longitudinal portion situated opposite this zone in the assembled condition.

9. A coupling system according to any one of Claims 1 to 8, **characterised in that** on the side of the peripherally extending groove (38) remote from a free end of the connecting socket (18) there is provided at least one stop member (33) projecting radially from the connecting socket (18).

10. A coupling system according to Claim 9,
**characterised in that** the at least one stop element (33) is formed by a rib (33) extending in the peripheral direction of the connecting socket (18), preferably over its entire periphery.

## Revendications

1. Système d'accouplement (10) comprenant au moins un tuyau souple (12) et conçu pour relier ledit tuyau souple minimal (12) à une douille de raccordement (16), au moyen d'un élément de liaison (14) réalisé distinctement dudit tuyau souple (12) et de ladite douille de raccordement (16),
ledit tuyau souple (12) à présence minimale comportant, à au moins l'une de ses extrémités, un embout de raccordement (18) pouvant être emboîté dans ladite douille de raccordement (16), ou emboîté sur cette dernière, et
ledit élément de liaison (14) pouvant être verrouillé à demeure sur l'extrémité du tuyau souple (12) munie de l'embout de raccordement, dans la direction axiale dudit tuyau souple (12), au moyen d'une liaison (26) par déclic,
sachant qu'il est prévu, pour établir la liaison (26) par déclic, un élément d'encliquetage (40) qui est réalisé distinctement de l'embout de raccordement (18) et de l'élément de liaison (14) et qui, à l'état monté, traverse un orifice (34) dudit élément de liaison (14), est en prise axiale avec une rainure (38) prévue sur l'embout de raccordement (18) et s'étendant dans le sens périphérique dudit embout de raccordement (18), et est encliqueté sur ledit embout de raccordement (18) et/ou sur ledit élément de liaison (14),
sachant qu'à l'état monté, ledit élément d'encliquetage (40) traverse un orifice additionnel (36) dudit élément de liaison (14), par son extrémité libre (40a), et est encliqueté sur un bord de cet orifice additionnel (36),
**caractérisé par le fait que** la venue en prise axiale de l'élément d'encliquetage (40), avec la rainure (38) de l'embout de raccordement (18), s'instaure entre deux orifices différents (34, 36) de l'élément de liaison (14) qui sont traversés par ledit élément d'encliquetage (40).

2. Système d'accouplement selon la revendication 1,
**caractérisé par le fait qu'**un bec encliquetable (40b), pointant de préférence vers l'extérieur dans le sens radial, est prévu à l'extrémité libre (40a) de l'élément d'encliquetage (40).

3. Système d'accouplement selon la revendication 1 ou 2,
**caractérisé par le fait que** l'élément d'encliquetage (40) fait partie d'une pièce unitaire d'encliquetage (42) substantiellement configurée en C, les branches libres de cette configuration en C étant réalisées, l'une et l'autre, sous la forme d'un élément d'encliquetage (40).

4. Système d'accouplement selon la revendication 3,
**caractérisé par le fait que** les deux éléments d'encliquetage (40) sont en prise axiale avec l'embout de raccordement (18), à l'état monté, dans deux régions périphériques pour l'essentiel diamétralement opposées.

5. Système d'accouplement selon la revendication 3 ou 4,
**caractérisé par le fait que** l'embout de raccordement (18) présente une rainure (38) qui s'étend dans le sens périphérique, et dans laquelle les deux éléments d'encliquetage (40) pénètrent.

6. Système d'accouplement selon l'une des revendications 1 à 5,
**caractérisé par le fait qu'**il est prévu, sur l'une (18) des deux pièces constituées par l'embout de raccordement ou par l'élément d'encliquetage, une protubérance (48) qui, à l'état monté de l'élément de liaison (14), peut être mise périphériquement en applique contre un évidement (46) prévu dans l'autre pièce (40 ou 42) constituée, respectivement, par ledit élément d'encliquetage ou par ledit embout de raccordement.

7. Système d'accouplement selon l'une des revendications 1 à 4 et 6, **caractérisé par le fait que** l'embout de raccordement (18) présente au moins deux protubérances (48), séparant les deux rainures (38) l'une de l'autre dans le sens périphérique.

8. Système d'accouplement selon l'une des revendications 1 à 7,
**caractérisé par le fait que**, sur un tronçon longitudinal partant de l'extrémité libre de l'embout de raccordement (18) et gagnant au moins la rainure (38) s'étendant dans le sens périphérique, la valeur maximale du diamètre extérieur dudit embout de raccordement (18) est inférieure ou, tout au plus, légèrement supérieure à la valeur minimale du diamètre intérieur de l'élément de liaison (14) sur le tronçon longitudinal de ce dernier qui est situé en regard de cette région à l'état monté.

9. Système d'accouplement selon l'une des revendications 1 à 8,
**caractérisé par le fait qu'**au moins un élément de butée (33), faisant saille au-delà de l'embout de raccordement (18) dans la direction radiale, est prévu du côté de la rainure (38), s'étendant dans le sens périphérique, qui est tourné à l'opposé d'une extrémité libre dudit embout de raccordement (18).

10. Système d'accouplement selon la revendication 9,
**caractérisé par le fait que** l'élément de butée (33), à présence minimale, est formé par une nervure (33) s'étendant dans le sens périphérique de l'embout de raccordement (18), de préférence sur l'intégralité du pourtour de celui-ci.
